# EUROPEAN PATENT APPLICATION

(11) **EP 2 474 232 A1**
(43) Date of publication of application: **11.07.2012**
(21) Application number: 09848974.3
(22) Date of filing: 03.09.2009
(51) Int. Cl.: A23C 19/076

(54) **METHOD FOR PRODUCING PASTEURIZED FRESH CHEESE**

(71) Applicant: Takanashi Milk Products Co., Ltd., Kanagawa 241-0023 (JP)
(72) Inventor: NAKAJIMA Kenji, Yokohama-shi Kanagawa 241-0023 (JP); TAKAHASHI Masanobu, Yokohama-shi Kanagawa 241-0023 (JP); HOSODA Masataka, Yokohama-shi Kanagawa 241-0023 (JP); HIRAMATSU Masaru, Yokohama-shi Kanagawa 241-0023 (JP)
(74) Representative: Gendron, Vincent Christian
(86) International application number: PCT/JP2009/065396
(87) International publication number: WO 2011/027443

(57) **Abstract**

An object is to provide a pasteurized fresh cheese which has a smooth texture and a good taste, shows little water release, scarcely shows a lowering in pH or acidity and has a long best-before period.

The objective is achieved by a method for processing a pasteurized fresh cheese comprising the steps of:
(a) coagulating a starting milk material to obtain a curd;
(b) adding a stabilizer to the curd;
(c) pasteurizing the curd by heating; and,
(d) separating a whey from the curd to obtain a cheese curd.

## Description

### Technical Field

The present invention relates to a method for processing a pasteurized fresh cheese, more specifically a method for processing a pasteurized fresh cheese which has a smooth texture and a good taste, shows little water release, scarcely shows a lowering in pH or acidity and has a long best-before period.

### Background Art

A fresh cheese is a cheese which is obtained by separating whey from a curd obtained by coagulating a starting milk material with Lactic acid bacteria, rennet, acid and the like and which is not subjected to maturing. Such a fresh cheese includes Fromage Blanc, Quark, cottage cheese, Mascarpone, Ricotta, Mozzarella and the like.

Among these fresh cheeses, Fromage Blanc and the like are obtained by coagulating a starting milk material using Lactic acid bacteria or a combination of Lactic acid bacteria and rennet. They have low fats and, when compared with yogurts, have cheese-peculiar mellow taste and smooth texture. Hence, in European countries, Fromage Blanc and the like are eaten by with breads, or as a dessert with honey or jam topped thereon, or used in making confectioneries such as cakes, and thus are well-known.

Fromage Blanc and the like include viable Lactic acid bacteria, which cause changes in pH, acidity and taste during storage. Hence, the best-before periods of these cheeses are generally short. Recently, fresh cheeses such as Fromage Blanc and the like are air-shipped for import from France and the like to Japan, but their commercial distribution in Japan is still small due to their short best-before periods and high prices.

Even if Fromage Blanc and the like are available, it is difficult to utilize them in western-style confectioneries due to their viable Lactic acid bacteria content because such confectioneries are marketed in department stores and the like where there are restrictions concerning bacteria.

In order to be free of the above-described restrictions concerning bacteria, Fromage Blanc and the like may be pasteurized, but then, when Fromage Blanc and the like are subjected to a regular heat pasteurization, whey proteins such as β-lactoglobulin undergo heat denaturation to bind the surface of a casein micelle whereby the casein micelle structure is altered to that different from the one before heating. This invites loss of smooth body characteristic, thereby reducing the product value significantly. For such reason, it has been difficult to subject Fromage Blanc and the like to heat pasteurization.

On the other hand, there is reported a method of pasteurizing a fresh cheese, which is a method for processing a pasteurized fresh cheese comprising a step of warming a fresh cheese while avoiding any heat denaturation while stirring to form a liquid whose viscosity is 50 poise or less at 40°C, preceded or followed by a step of adding a high methoxyl pectin, and a step of adjusting the pH at 3.5 to 4.6 followed by homogenizing and then heat pasturization (Patent Literatire 1).

With this method, however, the various steps, such as warming, liquefying, heat pasteurization, pH adjustment and the like, are conducted on a fresh which is already processed, making it difficult to obtain a satisfactory texture or taste. So practically, in order to obtain a pasteurized fresh cheese having satisfactory texture or taste, there are drawbacks such as the amount of methoxyl pectin to be added has to be increased and a stabilizer such as a gelling agent has to be used to adjust the physical property of the cheese curd.

### Related Art References

### Patent Document

Patent Document 1: Unexamined Japanese Patent Application Publication No. 5-252866

### Summary of Invention

### Technical Problem

Accordingly, an object of the present invention is to provide, through simplified steps, a pasteurized fresh cheese which has a smooth texture and a good taste, shows little water release, scarcely shows a lowering in pH or acidity and has a long best-before period.

### [Solution to Problem]

As a result of intensive study, the inventors of the present invention found that a pasteurized fresh cheese overcoming the aforementioned problems can be obtained by adding a stabilizer to a curd obtained by coagulating a starting milk material and then conducting heat pasteurization, and then separating whey to obtain a cheese curd, thus establishing the present invention.

Thus, the present invention is a method for processing a pasteurized fresh cheese comprising the steps of:
(a) coagulating a starting milk material to obtain a curd;
(b) adding a stabilizer to the curd;
(c) pasteurizing the curd by heating, and
(d) separating a whey from the curd to obtain a cheese curd.

Also, the present invention is a pasteurized fresh cheese processed by the aforementioned method for processing a pasteurized fresh cheese.

### Advantageous Effects of Invention

According to the method for processing a pasteurized fresh cheese of the present invention, a pasteurized fresh cheese which has a smooth texture and a good taste, shows little water release, scarcely shows a lowering in pH or acidity and has a long best-before period can be obtained through simplified steps.

The aforementioned fresh cheese has a prolonged best-before period due to the pasteurized Lactic acid bacteria contained therein. This allows the cheese to be used in western-style confectioneries marketed in department stores where there are restrictions concerning bacteria and also to be traded in regular supermarkets, thus raising expectations for market expansion.

### Description of Embodiments

As used herein, "fresh cheese" refers to a cheese which is obtained by separating whey from a curd obtained by coagulating a starting milk material with Lactic acid bacteria, rennet, acid or a combination thereof and which is not subjected to maturing. Such a fresh cheese includes Fromage Blanc, Quark and the like. Also as used herein, "pasteurized" means that the pasteurization is effected to a level of the total viable cell count in a fresh cheese immediately after processing that causes no deterioration even after a prolonged storage, for example, 1000 cells/g or less, preferably 300 cells/g or less. This total viable cell count can be determined, for example, by using a standard agar medium. In some countries, a pasteurized fresh cheese can not be defined as a fresh cheese. In such a case, the pasteurized fresh cheese is handled as a fresh cheese-like food product.

The step (a) in the method for processing a pasteurized fresh cheese according to the present invention (hereinafter referred to simply as an "the present invention method ") is a step for obtaining a curd by coagulating a starting milk material. The starting milk material or the coagulation method employed in this step (a) may be any known starting milk material or coagulation method depending on the type of the intended fresh cheese ("Natural cheese production technology manual":Japan Dairy Council, Zao Dairy Center).

The step (b) in the present invention method is a step for adding a stabilizer to the curd. The stabilizer employed in this step (b) prevents the coagulation of proteins under an acidic condition, and may, for example, be high methoxyl pectin, sodium carboxymethyl cellulose, soybean polysaccharide and the like. Among these stabilizers, high methoxyl pectin is preferred. Such a stabilizer is added in an amount of 0.05 to 0.5 g, preferably 0.1 to 0.25 g per 100 g of the curd. If the amount of the stabilizer exceeds this range, the body of the cheese curd becomes heavy. The method for adding the stabilizer to the curd is not limited particularly, and the stabilizer may be added directly to the curd, or may be dispersed in water and added as a stabilizer solution.

After adding the stabilizer to the curd and mixed it thoroughly in step (b), pre-heating at a temperature compatible to the heat pasteurization of step (c) to be described below, preferably about 50 to 80°C, and then homogenizing may be conducted.

Step (c) in the present inventive method is a step for pasteurizing the curd by heating. In this step (c), the heat pasteurization is conducted under a condition capable of pasteurizing Lactic acid bacteria and the like, for example at 63°C for 30 minutes (LTLT pasteurization) or equivalent thereto or severer condition, preferably at 72°C for 15 seconds (HTST pasteurization) or equivalent thereto or severer condition.

Step (c) is preferably followed by cooling to the same temperature as that upon separation of whey from the curd in step (d) to be described below.

Step (d) in the present invention method is a step for obtaining a cheese curd by separating whey from the curd.
In this step (d), the whey can be separated by any known separation means, for example, placing the curd in a fabric bag or a mold and dehydrating, centrifugation using a centrifuge, molecular weight fractionation using an ultrafiltration (UF) membrane or a microfiltration (MF) membrane and the like. Among these separation means, the molecular weight fractionation using a ultrafiltration membrane having a molecular weight cut-off of 10,000 to 150,000, preferably 50,000 to 150,000 or a microfiltration membrane having a pore size of 0.1 to 0.5 µm, preferably 0.1 to 0.2 µm is preferred in terms of maintaining a high temperature until the filling in step (e) to be described below, obtaining an excellent body of the resultant fresh cheese, a high cheese curd yield and the like. A concentration device employing such a filtration membrane may appropriately be selected and is preferably a cross-flow filtration device. While the whey separation may be conducted to the extent which may vary depending on the type of the intended fresh cheese, for example, it is conducted until the total solid content of the curd becomes 1.1 to 3.0 times, preferably 1.5 to 2.2 times that before the filtration. This whey separation is conducted at 10 to 85°C, preferably 60 to 75°C.

Step (d) may be followed by addition of a fat content such as cream, sauce or an accompanying ingredient such as fruit, confectionery and the like.

The cheese curd obtained as described above may be subjected to a step for filling it into a container (step (e)). The container employed in this step (e) is not limited particularly, and may be a cup container made from a polypropylene etc. or a pillow package. While the method for filling the cheese curd into such a container is not limited, a hot filling, cold filling and the like may be given and, the hot filling is preferably employed since it serves to sterilize any foreign microorganisms introduced upon filling as well as the container itself, thereby reducing the risk of contamination, provides a similarly sanitized environment also upon mixing auxiliary starting materials and the cheese curd, and prolongs the best-before period of the product. The temperature at which this hot filling is conducted is 55 to 85°C, preferably 60 to 75°C.

The container after being filled with the aforementioned cheese curd is sealed with a film made of aluminum or the like and refrigerated at 10°C or below.

It is preferable to conduct all steps of the present invention method with an automatic device in an aseptic manner.

As described above, the present invention method can not only produce the aforementioned fresh cheese but also accomplish the pasteurization of the Lactic acid bacteria without altering the texture or affecting the taste or the like adversely. Hence, it is preferably adopted for processing a fresh cheese which at least employs Lactic acid bacteria for coagulation that is viable and has a soft texture such as Fromage Blanc, Quark and the like. The fresh cheeses such as Fromage Blanc, Quark and the like described above each has a total solid content of about 5 to 30% by mass (hereinafter referred to simply as "%"), and a fat content in the total solid of about 0 to 40%.

An embodiment of processing Fromage Blanc and a Quark as a fresh cheese by the present invention method is described below in detail.
First, a starting milk material having a solid non-fat content of 8.0 to 16.0% and a fat content of 0 to 10.0%, which is standardized by combining a raw milk or a skim milk or a concentrated skim milk and a fat content such as cream, is homogenized and pasteurized. This pasteurization is conducted under the condition of 72°C for 15 seconds (HTST pasteurization) to 120 to 135°C for 1 to 3 seconds (UHT pasteurization) when using only Lactic acid bacteria and the condition of 72 to 78°C for 15 seconds (HTST pasteurization) when using Lactic acid bacteria in combination with rennet. After the pasteurization, the temperature is lowered to a point optimum for the fermentation by Lactic acid bacteria employed. Lactic acid bacteria employed may, for example, be Lactococcus lactis subsp. cremoris, Lactococcus lactis subsp. lactis, Leuconstoc mesenteroides subsp. cremoris, Leuconostoc pseudomesenteorides, Lactococcus lactis subsp. lactis biovar diacetylactis, Streptococcus thermophilus, Lactobacillus delbrueckii subsp. bulugaricus, Lactobacillus delbrueckii subsp. lactis, Lactobacillus helveticus and the like, and they may be employed alone or in combination. When a commercially available DVS starter containing these Lactic acid bacteria is added to a starting milk material, it is added at 0.001 to 0.5%, and the fermentation is conducted at a fermentation temperature optimum for the Lactobacillus employed until a pH of 3.5 to 5.0, preferably pH 4.30 to 4.50 is reached, thereby obtaining a curd. This curd is cooled to 10°C or below with stirring, thereby terminating the fermentation by Lactic acid bacteria. The cooled curd is supplemented with 1 to 2% high methoxyl pectin solution as a stabilizer in an amount of 1 part per 9 parts by mass of the curd, and is mixed thoroughly to ensure a satisfactory dispersion of the high methoxyl pectin within the curd. If the dispersion is poorly conducted, the coagulation can not be prevented satisfactorily. Thereafter, the curd is pre-heated to 50 to 70°C and homogenized using a homogenizer. Then, the curd is heated and kept at 72 to 78°C for 15 seconds or longer for HTST pasteurization. After the pasteurization, cooling to 60 to 70°C is conducted, followed by a cross-flow filtration employing a cross-flow filtration device having a microfiltration (MF) membrane whose pore size is 0.1 µm to remove the whey, and then the concentration is conducted until the total solid content of the curd becomes 1.5 to 2.2 times that before the filtration to obtain a cheese curd, and this cheese curd is filled in a container while keeping a temperature of 60 to 70°C, thereby obtaining a Fromage Blanc (Quark). After filling the curd into the container, the container is sealed with a film made of aluminum or the like and the Fromage Blanc (Quark) is cooled in the form of the container as it is to 10°C or below.

A pasteurized fresh cheese processed by the present invention method has smooth texture and good taste, shows little water release, scarcely shows a lowering in pH or acidity not only just after processing but also even after storage for 30 days. Hence, such fresh cheese has a best-before period prolonged by 10 days or longer when compared with an ordinary non-pasteurized fresh cheese.

### Examples

The present invention is further described in detail in the following Examples, which are not intended to restrict the invention in any way.

### Example 1

### Processing of Fromage Blanc(1):

A concentrated skim milk (solid-non-fat content: 30%, fat content: less than 0.3%) and a cream (solid-non-fat content: 4.8%, fat content: 47.0%) were employed for standardization to a solid non-fat content of 9.38% and a fat content of 3.85%. A homogenizer was used for homogenation, followed by keeping at 75°C for 15 seconds, thereby conducting HTST pasteurization. Then, the temperature was lowered to 20°C, thereby providing 40 kg of pasteurized milk. A commercially available Lactobacillus DVS starter for cheese (Lactococcus lactis subsp.cremoris) and Lactococcus lactis subsp.lactis (Christian Hansen A/S) were added at 0.01%, and the fermentation was conducted at 20°C for 19 hours and 30 minutes to achieve a pH of 4.5 to obtain a curd. This curd was cooled to 10°C or lower while stirring with a propeller, thereby terminating the fermentation by Lactic acid bacteria. The cooled curd was supplemented with 2.0% high methoxyl pectin solution in an amount of 1 part per 9 parts by mass of the curd, and was mixed thoroughly to ensure a satisfactory swelling of the high methoxyl pectin. Thereafter, the curd was pre-heated to 60°C and subjected to homogenization using a homogenizer under a pressure of 100 kg/cm², and then the tank was heated to 75°C which temperature was kept for 15 seconds, thereby effecting a batch pasteurization. After the batch pasteurization followed by cooling to 65°C, a temperature of 60 to 70°C was kept while conducting a cross-flow filtration employing a concentration device having a microfiltration membrane whose pore size was 0.1 µm, thereby effecting concentration until the total solid content of the curd became 2 times that before the filtration to obtain a cheese curd, and this cheese curd was filled in a container while keeping a temperature of 65°C, thereby obtaining a Fromage Blanc. After filling the curd into the container, the Fromage Blanc was cooled to 7°C or below and stored for 30 days. The Fromage Blanc before the storage was cultured on a standard agar medium and a BCP-supplemented plate count agar medium and then the total viable cell count and the Lactobacillus cell count were measured. The measurement of the pH and the acidity of the Fromage Blanc before and after the storage were conducted by a lactic acid expression method. In addition, the texture and the taste were evaluated freely.

The results of the test using the standard agar medium revealed that the total viable cell count of the Fromage Blanc before the storage was 30 cells/g, while the results of the test using the BCP-supplemented plate count agar medium revealed that the Lactic acid bacteria cell count of the Fromage Blanc before the storage was 30 cells/g. This Fromage Blanc, before the storage, had a pH of 4.46 and an acidity of 0.90, and its cheese curd exhibited a smooth texture and a satisfactory hardness. Also the Fromage Blanc, after a 30-day storage, had a pH of 4.45 and an acidity of 0.90, thus exhibiting no increase in the pH and the acidity attributable to the proliferation of the Lactic acid bacteria. Furthermore, the Fromage Blanc, after a 30-day storage, had a satisfactory taste and showed no water release, and exhibited a smooth texture and a satisfactory hardness.

### Example 2

### Processing of Fromage Blanc (2):

Fromage Blanc was obtained in a similar manner as in Example 1 except that after the batch pasteurization the temperature was lowered to 15°C, which was then kept while conducting a cross-flow filtration employing a concentration device having a microfiltration membrane whose pore size was 0.1 µm, thereby effecting concentration until the total solid content of the curd became 2 times that before the filtration to obtain a cheese curd, and this cheese curd was filled in a container while keeping a temperature of 15°C

This Fromage Blanc had substantially the same property to that obtained in Example 1.

### Example 3

### Production of Fromage Blanc (3):

A Fromage Blanc was obtained similarly to Example 1 except that after the batch pasteurization the temperature was lowered to 65°C and a temperature of 60 to 70°C was kept while conducting a centrifugation at 6,000 rpm for 5 minutes.

This Fromage Blanc exhibited a protein coagulation suppressing effect which was somewhat poorer when compared with that obtained in Example 1, and its texture was somewhat rough and it was likely to pose a floury mouthfeel. The cheese curd was partly coagulated too densely and could not be mixed uniformly even when stirring the curd, and a slightly increased water release during the storage was observed. Nevertheless, it was far more satisfactory when compared with the Fromage Blanc obtained in Comaparative Example 1 to be described below.

### Example 4

### Processing of Fromage Blanc (4):

A Fromage Blanc was obtained similarly to Example 1 except that after the batch pasteurization the temperature was lowered to 10°C, which was then kept while conducting a centrifugation at 6,000 rpm for 5 minutes, and concentration was conducted until the total solid content of the curd became 2 times that before the filtration to obtain a cheese curd, and this cheese curd was filled in a container while keeping a temperature of 10°C.

This Fromage Blanc had a smooth and satisfactory texture similarly to Example 1, but exhibited a slightly increased water release during the storage.

### Comparative Example 1

### Processing of Fromage Blanc (5):

Fromage Blanc was obtained in a similarly as in Example 1 except that no high methoxyl pectin was added to the curd.

The Fromage Blanc was not added with high methoxyl pectin as a stabilizer inviting protein denaturing coagulation to advance excessively, resulting in porous texture causing a sandy mouthfeel, which leads to the loss of the smoothness characteristics of Fromage Blanc.

### Industrial Applicability

According to a method for processing a pasteurized fresh cheese of the present invention, a pasteurized fresh cheese which has a smooth texture and a good taste, shows little water release, scarcely shows a lowering in pH or acidity and has a long best-before period can be obtained.

Accordingly, this fresh cheese can be used in western-style confectioneries marketed in department stores and also can be traded in regular supermarkets where it was rarely traded due to a concern of the best-before period.

## Claims

1. A method for processing a pasteurized fresh cheese comprising the steps of:
(a) coagulating a starting milk material to obtain a curd;
(b) adding a stabilizer to the curd;
(c) pasteurizing the curd by heating; and,
(d) separating a whey from the curd to obtain a cheese curd.

2. The method for processing a pasteurized fresh cheese according to Claim 1 wherein in step (a), the starting milk material is coagulated using at least Lactic acid bacteria.

3. The method for processing a pasteurized fresh cheese according to Claim 1 wherein in step (b), the stabilizer is high methoxyl pectin.

4. The method for processing a pasteurized fresh cheese according to Claim 1 wherein in step (c), the curd is pasteurized at 63°C for 30 minutes (LTLT pasteurization) or under an equivalent or severer condition.

5. The method for processing a pasteurized fresh cheese according to Claim 1 wherein in step (d), the whey is separated from the curd by an ultrafiltration membrane or a microfiltration membrane.

6. The method for processing a pasteurized fresh cheese according to Claim 1 further comprising the step of:
(e) filling the cheese curd in a container.

7. The method for processing a pasteurized fresh cheese according to Claim 6 wherein in step (e), the cheese curd is filled in the container at 55 to 85°C.

8. A pasteurized fresh cheese processed by the method for processing a pasteurized fresh cheese according to any of Claims 1 to 7.

9. The pasteurized fresh cheese according to Claim 8 which is a Fromage Blanc and a Quark.
